# EUROPEAN PATENT APPLICATION

(11) **EP 1 803 350 A2**
(43) Date of publication of application: **04.07.2007**
(21) Application number: 06026996.6
(22) Date of filing: 28.12.2006
(51) Int. Cl.: A01N 43/50, A01N 37/16, A01N 59/00, A01P 1/00

(54) **Method for preparing aqueous composition for sterilization**

(30) Priority: 28.12.2005 JP 2005378531; 24.07.2006 JP 2006200169
(71) Applicant: Fujifilm Corporation, Minato-ku Tokyo 106-0031 (JP)
(72) Inventor: Takeuchi, Kazuya, Ashigarakami-gun Kanagawa 258-8577 (JP); Kawakami, Masayuki, Ashigarakami-gun Kanagawa 258-8577 (JP)
(74) Representative: HOFFMANN EITLE

(57) **Abstract**

A method for preparing an aqueous composition for sterilization, which comprises the step of mixing an acylimidazole represented by the general formula (II): 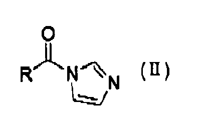 wherein R represents a substituted or unsubstituted C1-C20 alkyl group, or a substituted or unsubstituted C6-C30 aryl group, with an aqueous solution containing a hydrogen peroxide source to produce a corresponding peroxycarboxylic acid. An aqueous composition for sterilization suitable for sterilization of medical apparatuses such as endoscopes, which can be safely and quickly prepared upon use, and a method for preparing the same are provided.

## Description

### Technical Field

The present invention relates to a method for preparing an aqueous composition for sterilization, and a method for sterilization. More specifically, the present invention relates to a method for preparing an aqueous composition for sterilization which is suitable for sterilizing medical apparatuses such as endoscopes, and a method for sterilization utilizing such a composition.

### Background Art

Medical apparatuses such as endoscopes, which are not disposable, are directly contacted with patients and therefore need safer disinfection or sterilization for use in subsequent examinations and the like. However, especially in small scale hospitals, a single apparatus is often repeatedly used in a short period of time. Under these circumstances, a composition which have action of killing wide variety of microorganisms and ability of sterilizing a medical apparatus in a short period of time is desired as a composition used for disinfection or sterilization of a medical apparatus. Further, from a viewpoint of safety, amounts of chemical compounds in the composition are required to be as small as possible.

As a composition for cleaning and sterilizing medical apparatuses such as endoscopes, a composition containing an aldehyde such as glutaraldehyde as an active ingredient is conventionally known as a commercial product. However, for glutaraldehyde, various problems in the clinical field have been reported in recent years, for example, insufficient sterilizing action to spores and a cause of allergies.

Peracetic acid of a high concentration has strong irritancy to the skin, eyes and the like and strong smell. However, a solution thereof practically used as a sterilizer (which generally has a peracetic acid concentration of 0.2 to 0.35%) has relatively weak irritancy and smell. Moreover, decomposition products of peracetic acid are harmless acetic acid, water, and hydrogen peroxide (which is further decomposed into oxygen and water), and the acid does not cause a problem of environmental pollution. Therefore, a sterilizer or disinfectant containing peracetic acid as an active ingredient is expected as a sterilizer or disinfectant which can replace glutaraldehyde or orthophthalaldehyde preparations. Peracetic acid used as a sterilizer or disinfectant is usually provided in the form of a peracetic acid preparation, and used after dilution before use.

For example, when peracetic acid is used for disinfection of medical apparatuses such as endoscopes, it is common to prepare a solution at a final concentration of 0.2 to 0.35 w/v % upon use. For example, U.S. Patent No. 5,077,008 (Patent document 1) discloses an antimicrobial composition, which is diluted to a final concentration of 0.2 w/v % before use by using an apparatus for exclusive use, STERIS SYSTEM 1 (registered trade name, produced by STERIS Corporation), and is used only once. Nu-Cidex (Johnson & Johnson Medical Inc.) marketed in the United Kingdom comprises a concentrated peracetic acid solution, a stabilizing agent and a buffering agent, and the concentrated peracetic acid solution is diluted with the stabilizing agent and the buffering agent upon use and thereby adjusted to a final peracetic acid concentration of 0.35 w/v %. However, shelf life of the aqueous composition obtained by the dilution is specified to be one to three days. Acecide marketed in Japan (produced by Saraya Co., Ltd.) consists of a first agent containing a 8% solution of peracetic acid and a second agent containing stabilizing agent and the like, and the two agents are mixed, diluted with water before use, and used at a peracetic acid final concentration of 0.3 w/v %. The shelf life of the aqueous composition is specified to be 5 to 7 days after the preparation.

When peracetic acid is used as a sterilizer, a problem arises in handling property of a high concentration peracetic acid preparation before dilution. Because a high concentration peracetic acid preparation has acetic acid-like strong irritating smell, as well as extremely strong irritancy to the skin, eyes and the like, the acid should be very carefully used for provision against hazardous accidents. Moreover, because a higher concentration of peracetic acid results in a higher self-reactivity to have a danger of explosion, upper concentrations of marketable preparations are limited. Because requirements of laws and regulations which regulate the upper limit of the concentration of such a preparation differ in each country, resulting differences in levels of sterilization and disinfection methods for a single kind of medical apparatus is considered as a secondary problem. A low concentration peracetic acid solution (generally 0.2 to 0.35%) has weak irritancy and no problem in handling, and therefore, if a low concentration peracetic acid solution can be safely and quickly prepared upon use without using an diluting operation of a high concentration peracetic acid preparation, loads on safety and working environment of workers engaging disinfection may possibly be significantly reduced.

Various methods concerning preparation of peroxycarboxylic acids are explained in "Organic Peroxides", Vol. 1, D. Swern Ed, Wiley Interscience (1970), pp. 313-315 (Non-patent document 1). In most of the reactions described therein, for example, a corresponding carboxylic acid, acid anhydride, acid chloride, or aldehyde is used as a starting material of perhydrolysis reaction using hydrogen peroxide. As one of the reactions, perhydrolysis of an imidazolide of carboxylic acid is used to produce a peroxycarboxylic acid (described in Folli, U. et al (1968), Bollettino, 26, pp.61-69 (Non-patent document 2)). However, to the best knowledge of the inventors of the present invention, any reaction attempting perhydrolysis of an imidazolide of carboxylic acid under an acidic condition has not been reported.

In the field of detergent for laundry, it is well known that a combination of a peroxygen bleaching agent precursor (mainly as a peroxygen source) and a bleaching activator (mainly as an acylating agent) is used in the same composition or separate compositions. When the bleaching precursor and the bleaching activator are added to an aqueous washing solution, peroxide anions react with the bleaching activator to generally form peroxycarboxylic acid anions. Washing solution is always alkaline, and pH thereof is usually at least 9. However, peroxycarboxylic acids are unstable under a basic condition, and it is known that decomposition of peroxycarboxylic acids quickly advances especially under a pH condition higher than pKa of the peroxycarboxylic acids. Although this fact does not arise a practical problem in the field of detergent for laundry, in which washing solution is discarded every time, it causes a serious problem in a field in which immersion for a certain period of time or longer is required for sterilization, and repeated use of the solution is desired from a viewpoint of reduction of costs, for example, sterilization and disinfection of medical apparatuses such as endoscopes in the clinical field.

International Patent Publication in Japanese (KOHYO) Nos. 8-509695 (Patent document 2) and 8-509696 (Patent document 3) each disclose a method of reacting a peroxygen source and an acyl donor under an acidic condition to generate a stronger oxidation species. However, the patent documents do not disclose any information concerning concentration of peroxycarboxylic acid to be generated, and the methods of the disclosed examples have problems of slow advance of the reaction of the peroxygen source with the acyl donor and a wide fluctuation range of the peroxycarboxylic acid concentration. Therefore, from a viewpoint of application as a sterilizer, the method cannot provide constant antibacterial activity, and is not preferred for use in, for example, sterilization and disinfection of medical apparatuses such as endoscopes in the clinical field.

International Patent Publication in Japanese (KOHYO) No. 9-500630 (Patent document 4) discloses, as a method for preparing a sterilizer having a prolonged activity survival time, a method of using a quick acetylating agent (for example, TAED) and a slow acetylating agent (for example, acetylsalicylic acid) in combination. However, the aforementioned publication does not describe any possibility for realizing the desired performance by using a single kind of acetylating agent.
[Patent document 1] U.S. Patent No. 5,077,008
[Patent document 2] International Patent Publication in Japanese (KOHYO) No. 8-509695
[Patent document 3]] International Patent Publication in Japanese (KOHYO) No. 8-509696
[Patent document 4] International Patent Publication in Japanese (KOHYO) No. 9-500630
[Non-patent document 1] Organic Peroxides, Vol. 1, pp.313-315 (1970)
[Non-patent document 2] Bollettino., 26, pp.61-69 (1968)

### Disclosure of the Invention

An object of the present invention is to provide a method that enables safe and quick preparation of an aqueous composition for sterilization comprising a peroxycarboxylic acid upon use, and a sterilization method using an aqueous composition for sterilization prepared by the above preparation method. The method of the present invention is preferably used for sterilization of medical apparatuses such as endoscopes.

In order to achieve the foregoing object, the inventors of the present invention conducted intensive researches. As a result, they found that by mixing an acyl compound such as an N-acylimidazole and hydrogen peroxide under an acidic condition, a peroxycarboxylic acid was quickly generated. More specifically, they found that a peroxycarboxylic acid was quickly generated by a reaction of an acyl compound such as an N-acetylimidazole and hydrogen peroxide, and that an aqueous composition containing the resulting peroxycarboxylic acid had sufficient sterilizing action, to a degree that achieves complete killing of bacterial spores within a short period of time, maintained a concentration of the peroxycarboxylic acid for a certain period of time or longer, and was utilizable as a repeatedly usable sterilizer. The present invention was achieved on the basis of these findings.

The present invention thus provides a method for preparing an aqueous composition for sterilization, which comprises the step of mixing an acyl compound represented by the general formula (I): 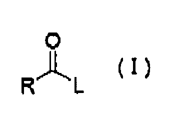 wherein L represents a leaving group, and R represents a substituted or unsubstituted C1-C20 alkyl group, or a substituted or unsubstituted C6-C30 aryl group, with an aqueous solution containing a hydrogen peroxide source to produce a corresponding peroxycarboxylic acid. The present invention also provides an aqueous composition for sterilization containing a peroxycarboxylic acid, which is obtainable by mixing a corresponding acyl compound represented by the aforementioned general formula (I) and an aqueous solution containing a hydrogen peroxide source and having pH of 2 to 6.

As preferred embodiments of the present invention, provided are the aforementioned method, wherein an acylimidazole represented by the following general formula (II): 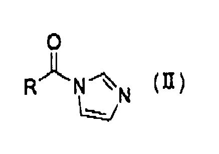 wherein R represents a substituted or unsubstituted C1-C20 alkyl group, or a substituted or unsubstituted C6-C30 aryl group, is used as the acyl compound ; the aforementioned method, wherein R is an unsubstituted C1-C10 alkyl group, or a C2-C10 alkoxy-substituted alkyl group; the aforementioned method, wherein R is methyl group, ethyl group, methoxymethyl group, 2-mothoxyethyl group, or 2-ethoxyethyl group, more preferably methyl group; the aforementioned method, wherein the aqueous solution has a hydrogen peroxide concentration of less than 30%, preferably less than 5%, most preferably less than 1%; the aforementioned method, wherein the acyl compound is used at a ratio of 1.0 equivalent or less, preferably 0.5 equivalent or less, per 1 mol of hydrogen peroxide; the aforementioned method, wherein the peroxycarboxylic acid is produced in the presence of a pH regulator; and the aforementioned method, wherein the peroxycarboxylic acid is produced in the presence of one or more kinds of substances selected from the group consisting of a metal chelating agent, a corrosion inhibitor, a stabilizing agent, and a surfactant.

From another aspect, the present invention provides a sterilization method, which comprises the step of bringing an aqueous composition for sterilization containing a peroxycarboxylic acid obtained by the aforementioned method into contact with an object of sterilization. The present invention also provides a sterilization method comprising (a) the step of mixing an acyl compound represented by the general formula (I) with an aqueous solution containing a hydrogen peroxide source to produce an aqueous composition for sterilization containing a corresponding peroxycarboxylic acid, and (b) the step of bringing the aqueous composition for sterilization obtained by the aforementioned step (a) into contact with an object of sterilization. The aforementioned aqueous composition containing a peroxycarboxylic acid, which is prepared by the aforementioned method, can be repeatedly used two or more times, and can be successively brought into contact with two or more objects of sterilization. As the object of sterilization, a medical apparatus is preferred, and an endoscope is particularly preferred. Moreover, the present invention provides the aforementioned sterilization method, wherein the aforementioned steps are performed in an automated washer.

From still further aspects, the present invention provides a kit for preparing an aqueous composition for sterilization containing a peroxycarboxylic acid, which comprises a composition containing an acyl compound represented by the aforementioned general formula (I) and a composition containing a hydrogen peroxide source; the aforementioned kit, wherein the acyl compound is an acylimidazole represented by the aforementioned general formula (II); the aforementioned kit, wherein the composition containing a hydrogen peroxide source further contains a pH regulator; and the aforementioned kit, wherein the composition containing the acyl compound further contains a pH regulator, as well as a reagent for preparing an aqueous composition for sterilization containing a peroxycarboxylic acid, which contains an acyl compound represented by the aforementioned general formula (I); the aforementioned reagent, wherein the acyl compound is an acylimidazole represented by the aforementioned general formula (II); any one of the aforementioned reagents, wherein R is an unsubstituted C1-C10 alkyl group, preferably methyl group; and any one of the aforementioned reagents, wherein R is a C2-C10 alkoxy-substituted alkyl group, preferably 2-ethoxyethyl group.

By the method of the present invention, an aqueous composition for sterilization having a practically effective peroxycarboxylic acid concentration can be conveniently and safely prepared in a short period of time. The aqueous composition for sterilization obtained by the method of the present invention is characterized in that the effective concentration of peroxycarboxylic acid is maintained over a certain period of time (for example, 8 hours) or longer. The aqueous composition for sterilization prepared by the method of the present invention is also characterized in that the composition can exhibit sufficient sterilization activity against, in particular, spores, for example, those of *Bacillus subtilis,* in a short period of time and maintains the sterilization activity, and therefore the composition can be repeatedly used for disinfection of medical apparatuses, especially endoscopes.

### Brief Explanation of Drawings

Fig. 1 shows results of monitoring changes in peracetic acid concentrations over time of the aqueous compositions shown in Examples 1 to 4.

Fig. 2 shows results of monitoring changes in peracetic acid concentrations over time of the aqueous compositions shown in Example 5 and Comparative Example 1.

Fig. 3 shows results of monitoring changes in 3-ethoxyperpropionic acid concentration over time of the aqueous composition shown in Example 6.

### Best Mode for Carrying out the Invention

The method of the present invention is a method for preparing an aqueous composition for sterilization, and characterized by comprising the step of mixing an acyl compound represented by the aforementioned general formula (I) with an aqueous solution containing a hydrogen peroxide source to produce a corresponding peroxycarboxylic acid. In the aforementioned step, the acyl compound is subjected to perhydrolysis by a reaction with hydrogen peroxide existing in the aforementioned aqueous solution to generate a corresponding peroxycarboxylic acid. Specifically, this is a reaction in which an acyl compound represented by the general formula (I): 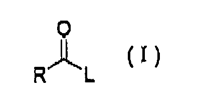 wherein L represents a leaving group, and R represents a substituted or unsubstituted C1-C20 alkyl group, or a substituted or unsubstituted C6-C30 aryl group, reacts with hydrogen peroxide to produce a peroxycarboxylic acid having hydroperoxide group (-OOH), which is represented by the following general formula (III) : 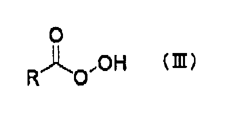 In a preferred embodiment, a compound represented by the general formula (II) having 1-imidazolyl group as L can be used as the acyl compound.

As the unsubstituted C1-C20 alkyl group represented by R, for example, a linear, branched, or cyclic alkyl group, or an alkyl group consisting of a combination of these can be used, and a linear or branched alkyl group can be preferably used. More specifically, examples include, for example, methyl group, ethyl group, propyl group, isopropyl group, butyl group, isobutyl group, sec-butyl group, tert-butyl group, pentyl group, isopentyl group, neopentyl group, tert-pentyl group, hexyl group, heptyl group, octyl group, nonyl group, decyl group, 2-ethylhexyl group, and the like. When the C1-C20 alkyl group represented by R has a substituent, type, number and substituting position of the substituent are not particularly limited. Examples of the substituent on the alkyl group include, for example, an alkoxyl group, a halogen atom (fluorine atom, chlorine atom, bromine atom, iodine atom and the like), an alkylsulfonyl group, and the like, and an alkoxyl group is preferred. An alkoxyl group as a substituent on the alkyl group may bind to the alkyl group to form a ring containing oxygen as a ring-constituting atom.

As the unsubstituted C6-C30 aryl group represented by R, a monocyclic or condensed polycyclic aromatic hydrocarbon group can be used. Examples include, for example, phenyl group, naphthyl group, and the like, and preferred examples include phenyl group. When the C6-C30 aryl group represented by R has a substituent, type, number and substituting position of the substituent are not particularly limited, Examples of the substituent include, for example, an alkyl group, an alkoxyl group, sulfonyl group, hydroxyl group, carboxyl group, and the like, but not limited to these examples.

As R, an unsubstituted C1-C10 alkyl group, or a C2-C10 alkoxy- substituted alkyl group (an alkoxy-substituted alkyl group having a total carbon number of 2 to 10) is preferred, an unsubstituted C1-C5 alkyl group, or a C2-C5 alkoxy-substituted alkyl group (an alkoxy-substituted alkyl group having a total carbon number of 2 to 5) is more preferred, methyl group, ethyl group, methoxymethyl group, 2-methoxyethyl group, or 2-ethoxyethyl group is still more preferred, and methyl group, 2-methoxyethyl group, or 2-ethoxyethyl group is particularly preferred. As R, methyl group is most preferred, but not limited to this example.

Type of the leaving group represented by L in the acyl compound represented by the general formula (I) is not particularly limited, and any leaving group that allows smooth advance of the aforementioned perhydrolysis accompanied by elimination of L under a usual reaction condition may be used. For example, it is preferred that pKa of the conjugate acid HL is not smaller than pKa of the carboxylic acid originating in the acyl group, and it is more preferred that it is not smaller than pKa of the peroxycarboxylic acid originating in the acyl group. More specifically, imidazolyl group, and the like are preferred, and as the acyl compound, an N-acylimidazole represented by the aforementioned general formula (II) is particularly preferred.

The acyl compound represented by the general formula (I) may have one or more asymmetric carbons depending on the types of the substituents. Any of the stereoisomers in optically pure forms based on one or more asymmetric carbons, any mixtures of said stereoisomers, racemates, diastereoisomers based on two or more asymmetric carbons, any mixtures of said diastereoisomers and the like may be used for the method of the present invention. Further, the aforementioned acyl compound may exist as a hydrate or solvate, and these substances may also be used for the method of the present invention.

Specific examples of the acyl compound are shown below. However, the acyl compounds usable for the method of the present invention are not limited to the following examples. In the following specific examples, Me represents methyl group, and Et represents ethyl group.

| | | | |
|---|---|---|---|
| Compound 1 | 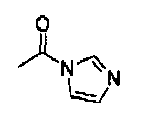 | Compound 2 | 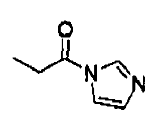 |
| Compound 3 | 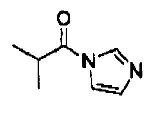 | Compound 4 | 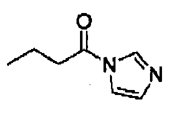 |
| Compound 5 | 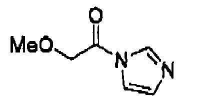 | Compound 6 | 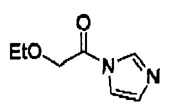 |
| Compound 7 | 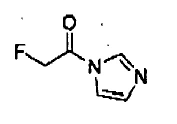 | Compound 8 | 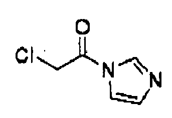 |
| Compound 9 | 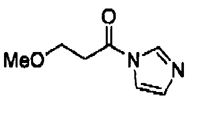 | Compound 10 | 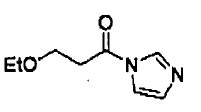 |
| Compound 11 | 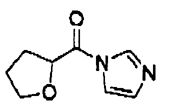 | Compound 12 | 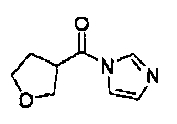 |
| Compound 13 | 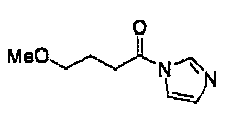 | Compound 14 | 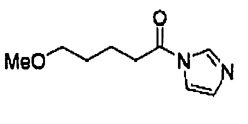 |
| Compound 15 | 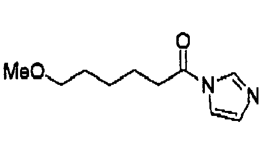 | Compound 16 | 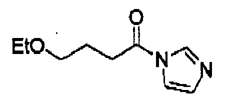 |
| Compound 17 | 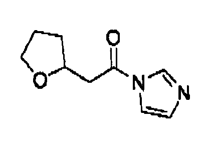 | Compound 18 | 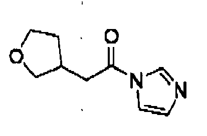 |
| Compound 19 | 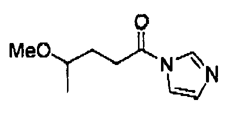 | Compound 20 | 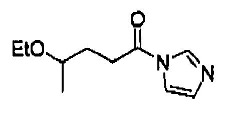 |

As the acyl compound used for the preparation method of the present invention, commercially available compounds can be used, and acyl compounds suitably synthesized by known methods can also be used. For example, as acylimidazoles, those synthesized by converting a corresponding carboxylic acid into an acid chloride with oxalyl chloride or thionyl chloride, and reacting the acid chloride with imidazole can be used.

As the hydrogen peroxide source, an inorganic peroxy acid salt or organic peroxide and the like that is dissolved in water to generate hydrogen peroxide can be used, as well as an aqueous solution of hydrogen peroxide, An aqueous solution of hydrogen peroxide, or an inorganic peroxy acid salt is preferably used, and an aqueous solution of hydrogen peroxide is more preferred. As the inorganic peroxy acid salt, for example, a percarbonic acid salt, a perboric acid salt, and the like are preferred, and a perboric acid salt such as sodium perborate is more preferred. As the organic peroxide, benzoyl peroxide or urea peroxide is preferred, and urea peroxide is more preferred.

A hydrogen peroxide concentration in the aqueous solution containing the hydrogen peroxide source is not particularly limited. For example, the concentration is preferably less than 30%, more preferably less than 5%, most preferably less than 1%. A method for preparing the aqueous solution containing hydrogen peroxide is not also particularly limited, and an aqueous solution of hydrogen peroxide, per se, may be used. In addition, aqueous hydrogen peroxide of a high concentration may also be diluted to an appropriate concentration. Alternatively, an inorganic peroxy acid salt or an organic peroxy acid salt may be dissolved in water at an appropriate concentration, and further diluted to a desired concentration as required.

A concentration of the acyl compound to be added to the aqueous solution containing the hydrogen peroxide source is not particularly limited. The concentration is preferably 1.0 equivalent or less, more preferably 0.5 equivalent or less, per 1 mol of hydrogen peroxide existing in the aforementioned aqueous solution. The acyl compound in a form of a solid may be put into the aqueous solution containing the hydrogen peroxide source and then dissolved. Alternatively, an aqueous solution of the acyl compound may be prepared, and then mixed with the aqueous solution containing the hydrogen peroxide source.

A period of time until the acyl compound and hydrogen peroxide react to produce a peroxycarboxylic acid at a desired concentration required for sterilization is not particularly limited. However, in order to shorten working time required for sterilization and to reduce loads on workers, it is desirable that generation of the peroxycarboxylic acid serving as the active ingredient for sterilization should advance as quickly as possible so that the concentration thereof can reach a peak concentration. It is preferred that, after all the ingredients are dissolved, the concentration of peracetic acid should reach a peak concentration within 60 minutes or less, more preferably 30 minutes or less, most preferably 20 minutes or less. Although temperature for preparing the sterilizer is not particularly limited, the preparation can be performed, for example, at 0 to 95°C, preferably 5 to 80°C, more preferably 10 to 40°C.

The aqueous composition containing a peroxycarboxylic acid prepared as described above, per se, can be used as the aqueous composition for sterilization of the present invention. However, if it is required to maintain contact of an object of sterilization and the sterilizer for a certain period of time or longer, or if the sterilizer once prepared is repeatedly used, the concentration of the peroxycarboxylic acid as the active ingredient for sterilization should be maintained for a certain period of time or longer. Stability of the peroxycarboxylic acid in the aqueous composition is affected by various factors, and a pH of the aqueous composition is one of major factors. In particular, it is known that a peroxycarboxylic acid is quickly decomposed under a basic condition, and therefore, pH of the aqueous composition for sterilization is preferably 2 to 6, more preferably 2 to 6, most preferably 2 to 4. Further, the above pH is preferably maintained for an entire period of time during which the aqueous composition for sterilization is used. A length of the period is not particularly limited. For example, the pH is maintained for preferably 60 minutes or longer, more preferably 5 hours or longer, particularly preferably 12 hours or longer.

In order to maintain the aforementioned pH, a pH regulator can be used in the method of the present invention. As the pH regulator, an organic acid such as citric acid, acetic acid, tartaric acid, malic acid, lactic acid, glycolic acid, succinic acid, glutaric acid, or adipic acid, and a salt thereof, an inorganic acid such as phosphoric acid or sulfuric acid, and a salt thereof, and a base such as ammonium hydroxide or hydroxide of an alkaline metal can be used. However, pH regulators which can be used in the present invention are not limited to the above examples. When a perboric acid salt is used, a borate is generated as a by-product, and therefore a substance which reacts with the borate to lower the pH, for example, cis-1,2-diol, glycol, polyol, boric acid, sodium dihydrogenphosphate, or the like can be used. It is also suitable to use the pH regulator as an acidifying ingredient together with other inorganic salts. A concentration of the pH regulator is not particularly limited. The concentration is preferably 20 mass % or less, particularly preferably 5 mass % or less, based on the total mass of the sterilizer prepared according to the present invention.

The method for using the pH regulator is not particularly limited. The regulator may be added in a form of a solid together with the acyl compound, or may be added to the aqueous solution containing the acyl compound, or alternatively, the regulator may be added to the aqueous solution containing the hydrogen peroxide source. The regulator may also be added to the aqueous composition as the reaction system. It is preferable to add the pH regulator to the aqueous solution containing the hydrogen peroxide source, and finally add the acyl compound, or simultaneously add the acyl compound and the pH adjustor, and it is more preferable to finally add the acyl compound to the reaction system. Mixing for preparing the reaction system may be manually performed by a worker, or mechanically performed in an automated washer.

When the aqueous composition for sterilization prepared by the method of the present invention is used for sterilization of a medical apparatus such as an endoscope, sufficient sterilizing properties are required also to bacterial spores. A concentration of the peroxycarboxylic acid in the aqueous composition for sterilization is not particularly limited. The concentration is preferably 1 to 100 mM, more preferably 5 to 80 mM, particularly preferably 10 to 60 mM, to achieve the aforementioned object. When peracetic acid is used, the concentration is preferably 0.05 to 0.5 w/v %, more preferably 0.1 to 0.4 w/v %, judging from past experiences of the uses of peracetic acid. The term "bacterial spore" used in the specification means a durable type cell formed by aerobic bacilli such as *Bacillus subtilis,* anaerobic bacilli such as those belonging to the genus *Clostridium* and the like at the end of the proliferation stage.

The aqueous composition for sterilization prepared by the method of the present invention may contain, in addition to the aforementioned ingredients, one or more kinds of additives. Examples of the additives include corrosion inhibitors, solubilizing agents, metal chelating agents, stabilizing agents, surfactants, anti-redeposition agents and the like, but not limited to these examples. These additives may be used independently, or two or more kinds of them may be used in combination. Methods for using these additives are not particularly limited, and they may be added to the reaction system together with the acyl compound, or may be added to the aqueous solution containing the hydrogen peroxide source, or alternatively, may be added to the reaction system together with the pH regulator and the like.

As the corrosion inhibitors, an agent suitable for a material of the medical apparatus to be sterilized may be chosen. Examples include agents comprising a combination of 1,2,3-benzatriazole and one or more compounds selected from the group consisting of a lower alkyl benzotriazole, hydroxybenzotriazole, a lower alkyl hydroxybenzotriazole, carboxybenzotriazole, a lower alkyl carboxybenzotriazole, benzimidazole, a lower alkyl benzimidazole, hydroxybenzimidazole, a lower alkyl hydroxybenzimidazole, carboxybenzimidazole, a lower alkyl carboxybenzimidazole, mercaptobenzothiazole, a lower alkyl mercaptobenzothiazole, hydroxymercaptobenzothiazole, a lower alkyl hydroxymercaptobenzothiazole, carboxymercaptobenzothiazole, a lower alkyl carboxymercaptobenzothiazole, sodium gluconate, sodium benzoate, butyl benzoate, monoethanolamine, triethanolamine, morpholine, sorbitol, erythritol, sodium phosphate, sodium tripolyphosphate, tetrasodium pyrophosphate, sodium molybdate, sodium nitrite, sodium bisulfite, sodium metabisulfite, a chromate, and a borate. However, the corrosion inhibitor is not limited to these examples. In the present specification, the term "lower alkyl" means a liner or branched, and saturated hydrocarbon group having 1 to 6 carbon atoms.

When the composition of the present invention is used for a sterilization treatment of an apparatus containing copper, brass, bronze, or polymetal system, or the like, a corrosion inhibitor is preferably used which comprises 1,2,3-benzotriazole, a lower alkyl benzotriazole, hydroxybenzotriazole, a lower alkyl hydroxybenzotriazole, sodium molybdate, sodium nitrite, sodium bisulfite, sodium metabisulfite, a chromate, a borate, or an arbitrary combination of these. A corrosion inhibitor comprising 1,2,3-benzotriazole, sodium molybdate, sodium nitrite, or an arbitrary combination of these is particularly preferably used. When the composition of the present invention is used for a sterilization treatment of an apparatus containing carbon steal and/or stainless steal, or the like, for example, a corrosion inhibitor comprising sodium benzoate, sodium nitrite, sodium molybdate or the like is preferably used. The total amount of a corrosion inhibitor in the aqueous composition for sterilization prepared by the method of the present invention is not particularly limited.

When a corrosion inhibitor has a poor solubility in the aqueous composition for sterilization prepared by the method of the present invention, the composition may further comprise a solubilizing agent such as an alkylene glycol. In the specification, the term "alkylene glycol" means, for example, ethylene glycol, propylene glycol, dialkylene glycol (for example, diethylene glycol), trialkylene glycol (for example, triethylene glycol), and glycols such as corresponding mono- and di-alkyl ethers of the aforementioned glycols, wherein the alkyl ethers are lower alkyl ethers having 1 to 6 carbon atoms (for example, methyl, ethyl, propyl ether and the like). Most preferably, the composition comprises propylene glycol as a solubilizing agent, and the propylene glycol is preferably contained in the aqueous composition for sterilization prepared by the method of the present invention at a concentration about 3 to 10 times that of the corrosion inhibitor. For example, when 1,2,3-benzotriazole is contained in the aqueous composition of the present invention at about 1 mass %, propylene glycol is preferably contained in the aqueous composition of the present invention at about 3.5 to 6.5 mass %.

The aqueous composition for sterilization prepared by the method of the present invention preferably comprises a heavy metal ion chelating agent as an optional ingredient. In the present specification, a heavy metal ion chelating agent means an ingredient having an action of chelating a heavy metal ion, and means an ingredient which more selectively bonds to a heavy metal ion such as those of iron, manganese, and copper, even when the agent also has an ability of chelating calcium and magnesium. The heavy metal ion chelating agent can be used at a ratio of 0.005 to 20 mass %, preferably 0.1 to 10 mass %, more preferably 0.25 to 7.6 mass %, most preferably 0.5 to 5 mass %, based on the total mass of the aqueous composition for sterilization prepared by the method of the present invention. Examples of heavy metal ion chelating agents suitably added to the aqueous composition for sterilization of the present invention include, for example, organic phosphonates such as aminoalkylene poly(alkylene phosphonate), alkaline metal ethane 1-hydroxy diphosphonate and nitrilotrimethylene phosphonate. Among them, aminotri(methylene phosphonate), diethylenetriaminepenta(methylene phosphonate), ethylenediaminetri(methylene phosphonate), ethylenediaminetetra(methylene phosphonate), hexamethylenediaminetetra(methylene phosphonic acid), and hydroxy-ethylene-1,1-diphosphonate are preferred.

Examples of other heavy metal ion chelating agents preferably added to the aqueous composition for sterilization prepared by the method of the present invention include nitrilotriacetic acid, polyamino carboxylic acid such as ethylenediaminetetraacetic acid, ethylenetriaminepentaacetic acid, ethylenediaminedisuccinic acid, ethylenediaminediglutaric acid, 2-hydroxypropylenediaminedisuccinic acid, or a salt thereof, Ethylenediamine-N,N'-disuccinic acid (EDDS), or an alkaline metal, alkaline earth metal, ammonium, or substituted ammonium salt thereof, or a mixture thereof is particularly preferred.

Examples of other heavy metal ion chelating agents preferably added to the aqueous composition for sterilization prepared by the method of the present invention include 2-hydroxyethyldiacetic acid, and iminodiacetic acid derivatives such as glyceryl iminodiacetic acid which are described in European Patent Unexamined Publication Nos. 317,542 and 399,133; iminodiacetic acid-N-2-hydroxypropylsulfonic acid and aspartic acid -N-carboxymethyl-N-2-hydroxypropyl-3-sulfonic acid chelating agent which are described in European Patent Unexamined Publication No. 516,102; β-alanine-N,N'-diacetic acid, aspartic acid-N,N'-diacetic acid, aspartic acid-N-monoacetic acid, and iminodisuccinic acid chelating agent which are described in European Patent Unexamined Publication No. 509,382. In European Patent Unexamined Publication No. 476,257, a suitable chelating agent having an amino group is described. In European Patent Unexamined Publication No. 510,331, a suitable chelating agent derived from collagen, keratin, or casein is described. In European Patent Unexamined Publication No. 528,859, a suitable alkyliminodiacetic acid chelating agent is described. Dipicolinic acid and 2-phoephonobutane-1,2,4-tricarboxylie acid are also preferred. Glycinamide-N,N'-disuccinic acid (GADS), ethylenediamine-N,N'-diglutaric acid (EDDG), and 2-hydroxypropylenediamine-N,N'-disuccinic acid (HPDDS) are also preferred. However, heavy metal ion chelating agents suitably added to the aqueous composition for sterilization prepared by the method of the present invention are not limited to the above examples.

As a stabilizing agent, any known stabilizing agent may be used, and examples include phosphates, 8-hydroxyquinoline, stannic acid, sulfolene, sulfolane, sulfoxide, sulfone, sulfonic acid and the like. For the aqueous composition for sterilization prepared by the method of the present invention, a phosphate is a preferred stabilizing agent. Preferably, the aqueous composition for sterilization contains phosphates at about 0.001 to about 0.5 mass % based on the total mass of the composition. The aforementioned phosphate is selected from the group consisting of sodium orthophosphate, potassium orthophosphate, sodium pyrophosphate, potassium pyrophosphate, sodium polyphosphate, potassium polyphosphate, and a combination thereof.

Further, the aqueous composition for sterilization prepared by the method of the present invention may optionally contain a surfactant up to about 30 mass % based on the total mass of the composition. As the surfactant, a surfactant may be used which is stable to oxidation and decomposition under an acidic condition in the presence of a peroxycarboxylic acid and hydrogen peroxide, and a surfactant susceptible to oxidation is preferably avoided. A suitable surfactant can be selected from non-ionic-type, anionic-type, zwitter ion-type, and cationic-type surfactants. Examples of preferred surfactant to be added to the aqueous composition for sterilization prepared by the method of the present invention include, for example, non-ionic-type surfactants, specifically, polyethylene/polypropylene block polymer type surfactant, polyoxyethylene alkylphenyl ether type surfactant, polyoxyethylene ether type surfactant, polyoxyethylenesorbitan type surfactant, and the like. However, surfactants to be added to the aqueous composition for sterilization prepared by the method of the present invention are not limited to the above examples.

As an antiredeposition agent, an agent may be used which has an action of maintaining substances such as stains, which are desorbed from a medical apparatus, being suspended in a liquid. For example, organic aqueous colloids (such as starch, gelatin, an ethercarboxylic acid salt or an ethersulfonic acid salt of starch, cellulose, a cellulose ether, an ethercarboxylic acid salt or othersulfonic acid salt of cellulose, or an acidic sulfonic ester salt of cellulose or starch), and the like can be used. A water soluble polyamide having an acidic group can also be preferably used. Further, starch derivatives other than the aforementioned derivatives such as an aldehyde starch can also be used. However, antiredeposition agents to be added to the aqueous composition for sterilization prepared by the method of the present invention are not limited to these examples. As the antiredeposition agent, one or more types agents selected from the group consisting of the aforementioned compounds exemplified as antiredeposition agents can be used. A concentration of the antiredeposition agent in the aqueous composition for sterilization prepared by the method of the present invention is preferably 5 mass % or less, particularly preferably 2 mass % or less, based on the total mass of the aqueous composition.

The term "sterilization" used in the present specification should be construed in its broadest sense including, in addition to an action of killing microorganisms, bacteriostatic action inhibiting division, proliferative inhibitory action and the like, and the term should not construed in any limitative way. The term "sterilization" also includes meanings of "washing", "disinfection", "complete sterilization", "antibacterial treatment" and the like. By choosing conditions such as a concentration of peroxycarboxylic acid, time for contact with a medical apparatus and the like, even "complete sterilization" of a medical apparatus can be achieved by using the aqueous composition for sterilization of the present invention. Spores as being bacteria having particularly high resistance, for example, *Bacillus subtilis,* can be killed in a short period of time by using the aqueous composition for sterilization of the present invention.

The aqueous composition for sterilization provided by the present invention can exhibit a sterilization action to various microorganisms mainly based on chemical actions, and can be provided as those corresponding to any of sterilizers having high-, middle-, and low level effect, which are classified by Spaulding. Spaulding classified a sterilizer which can mainly kill proliferative common bacteria as a low level (low grade) sterilizer; a sterilizer which can kill a highly resistant bacterium such as *Bacillus tuberculosis* as a middle level (middle grade) sterilizer; and a sterilizer which can kill the most highly resistant bacterial spores as a high level (high grade) sterilizer.

Although use of the aqueous composition for sterilization of the present invention is not particularly limited, most of treatable objects of sterilization are liquids and solids. A polluted vapor phase can be efficiently sterilized by spraying a diluted solution of the composition for sterilization of the present invention or by babbling the vapor phase through the aqueous composition for sterilization of the present invention. Examples of liquids as objects of sterilization include aqueous substances contaminated with microorganisms such as recirculation process water, pre-disposal aqueous outflow fluids. Such process water and outflow fluids are produced in many industries, and may be contaminated with bacteria, algae, or yeast, or more rarely with virus. Further, contaminated process water may also be produced during treatments of plant and animal substances. Examples include outflow fluids from paper and pulp industries, food processing industries (for example, sugar production industry, brewing, wine production, and alcohol distillation industries), and straw processing, wastewater from sewage-treatment plants (for example, partially treated or simply filtered sewage water as wastewater via duct line to sea), meat processing plants, animal fat refining industry, and livestock breeding, and the like. Examples of other liquids to be sterilized include irrigation water in gardening industry, aqueous fertilizer and circulating water in tank farming, water for culture fishery in fishery industry, and the like. Other important generation sources of contaminated aqueous substances include coolant water discharged from industrial activities or air conditioning equipments in large buildings (for example, hotels, business offices, and hospitals). The aqueous composition for sterilization of the present invention can also be used for sterilization treatment of non-aqueous liquid substance such as cutting oil.

The aqueous composition for sterilization prepared by the method of the present invention can be used for treatment of plants which are being growing, especially plants as harvests are being growing (for example, cereal grass, leafy vegetables, vegetable crop for salad, root crop, beans, sup fruits, citrus plants, and nuts). Further, as easily understood by an artisan, the aqueous composition for sterilization prepared by the method of the present invention can be used for, if necessary, a different purpose such as bleaching, and the composition can be used also as a bleaching additive in laundry,

In addition, the aqueous composition for sterilization prepared by the method of the present invention can be used for disinfection of a solid, for example, a substance having a hard surface, or a soiled substance which is intended to be reused in the fields of food treatment, animal bleeding, gardening, catering, homes, and hospitals. Examples of the substance having a hard surface include substances made of metal, wood, ceramics, glass, fabrics, plastics and the like, including food packages, contact lenses, workbenches, walls, floors, sanitary wares, pools, industrial plants, clothing materials, sheets, covers, apparatuses, containers, industrial tools, machines, plants, piping, and the like. Examples of the soiled substance which is intended to be reused in the field of hospitals include various medical apparatuses such as apparatus for wearing lens, endoscopes, surgical instruments such as knife and catheter, obstetrical or urological instruments, anesthesia apparatuses, artificial ventilators, dialysis treatment apparatuses, dental instruments or supportive instruments thereof, syringes, clinical thermometers, plastic instruments, and the like, The aqueous composition for sterilization prepared by the method of the present invention is suitable for sterilization of dental instrument and surgical instruments such as endoscopes, which need short time sterilization. As is easily understood by an artisan, as for a substance which has a hard surface and is rather small in a size, it is often convenient to soak it in a solution of the aqueous composition for sterilization prepared by the method of the present invention. As for use for a larger scale, spray or a similar dispersion procedure can be more easily applied. Such disinfection procedure can also be used for disinfection of hygroscopic materials such as soiled linen, in particular, soiled baby diapers (which is often made of terry towel cloth).

A sterilization method using the aqueous composition for sterilization prepared by the method of the present invention is not particularly limited, A sterilization method is preferred wherein an object of sterilization is soaked in the aqueous composition for sterilization to achieve a contact of the object with the composition. In said soaking, the aqueous composition for sterilization may be stirred, the object of sterilization may be shaken, or an automatic washer may be used. Further, as suggested in "Guideline for washing and disinfection of endoscope, the second edition", an automatic washer may be used after washing by hands. The automatic washer is not particularly limited, and a commercial washer can be used. The method may include a step of washing the object of sterilization before or after said soaking. The method may further include a step of wiping the object of sterilization with sterilized gauze or a step of drying the object of sterilization with a dryer after the soaking. The term "washing" used in the specification means a procedure to reduce stains of the object of sterilization. The means used for washing is not particularly limited, and water, alkaline detergent, neutral detergent, alcohol detergent, enzyme detergent, ultrasonic washing or the like may be preferably used. Temperature for the sterilization is not particularly limited, and 0°C or more is preferred, and the aqueous composition is more preferably used at an ordinary temperature. The ordinary temperature means a temperature in the range of ordinary life. For example, the ordinary temperature is generally about 15 to 25 °C in facilities such as hospitals. The aqueous composition of the present invention can also be used at a temperature higher than the ordinary temperature, if necessary. Time for contacting the object of sterilization with the aqueous composition of the present invention is not particularly limited provided that the time is about 15 seconds or more. The time is preferably 20 minutes or less, more preferably 10 minutes or less, particularly preferably 5 minutes or less. The aqueous composition of the present invention may contact once with an object of sterilization, or sterilization can be repeated twice or more.

Further, by applying the method of the present invention, it is also possible to add the acyl compound represented by the general formula (I) or (II) and/or the hydrogen peroxide source to an aqueous composition for sterilization, in which peroxycarboxylic acid concentration is reduced over time or after multiple time applications, to increase the peroxycarboxylic acid concentration compared with the concentration before the addition. The method for the addition is not particularly limited.

According to the present invention, a kit comprising a reagent containing at least the acyl compound (henceforth referred to as the "first reagent"), and a reagent containing at least the hydrogen peroxide source (henceforth referred to as the "second reagent") can be provided, and the two reagents can be mixed upon use and then used. The resulting mixture can also be diluted with water and used, if necessary. When the mixture is diluted with water before use, although the first reagent and the second reagent may be mixed in an arbitrary order, it is preferred that both are simultaneously mixed, or the first reagent is mixed later. Further, the first and/or second reagent may contain one or more kinds of substances chosen from the group consisting of a pH regulator, a corrosion inhibitor, a metal chelating agent, a stabilizing agent, and a surfactant.

Furthermore, in addition to the first reagent and the second reagent, a third reagent may be prepared and mixed, if needed. The third reagent is prepared as, for example, a reagent containing one or more kinds of substances chosen from the group consisting of a corrosion inhibitor, a pH regulator, a metal chelating agent, a stabilizing agent, and a surfactant, and mixed together with the first reagent and the second reagent upon use. The resulting mixture may also be diluted with water before use, if needed. When the mixture is diluted with water before use, although the first, second and third reagents may be mixed in an arbitrary order, it is preferred that three of the reagents are simultaneously mixed, or the first reagent is finally mixed.

The aqueous composition for sterilization prepared by the method of the present invention per se can be used for a sterilization treatment. However, the aqueous composition can also be used in combination with other sterilizer. For example, the aqueous composition can be mixed with another sterilizer and used. The mixture may be used after dilution with water, if necessary. Alternatively, a sterilization treatment with another sterilizer can be employed before or after the sterilization with the aqueous composition for sterilization of the present invention. The sterilizer to be combined with the aqueous composition for sterilization of the present invention is not particularly limited. However, for example, peracetic acid, aqueous hydrogen peroxide, glutaraldehyde, orthophthalaldehyde, ethanol for disinfection, and the like are preferred.

Upon the use of the aqueous composition for sterilization prepared by the method of the present invention, a method for observing whether the composition contains a peroxycarboxylic acid at a desired concentration or higher concentration is not particularly limited. However, a method using an indicator based on chemical or electrochemical principle is preferred. Examples of the method based on chemical principle include measurement methods using coloring by oxidation-reduction and coloring by change of pH. Examples of the method based on electrochemical principle include measurement methods using pulse current measurement, resistance measurement of a solution, electric potential difference current measurement, and the like.

A method of disposal of the aqueous composition for sterilization prepared by the method of the present invention is not particularly limited. If the composition is diluted with a large amount of water, a paroxycarboxylic acid changes to the corresponding carboxylic acid by the change of the chemical equilibrium, which therefore enables disposal with lower load to environment. The aqueous composition provided by the method of the present invention can also be discarded after an inactivation treatment. The inactivation treatment means a treatment for reducing the amount of peroxycarboxylic acid, and the method for inactivation is not particularly limited. Examples include methods such as treatment with a reducing agent or the like, irradiation with ultraviolet ray, adjustment to a high pH, irradiation with ultrasonic wave and the like.

### Examples

The present invention will be explained more specifically with reference to examples. However, the scope of the present invention is not limited to the following examples.

In the following examples, as Compound 1, a reagent produced by Tokyo Chemical Industry Co., Ltd. was used.

### A. Preparation of peroxycarboxylic acids by mixing aqueous hydrogen peroxide and acyl compound

### (Example 1)

Compound 1 (0.32 g) was dissolved in 40 ml of 0.75% aqueous hydrogen peroxide (pH 3.1) prepared by using a sodium citrate buffer at room temperature.

### (Example 2)

Compound 1 (0.24 g) was dissolved in 40 ml of 0.56% aqueous hydrogen peroxide (pH 3.1) prepared by using a sodium citrate buffer at room temperature.

### (Example 3)

Compound 1 (0.22 g) was dissolved in 40 ml of 0.50% aqueous hydrogen peroxide (pH 3.1) prepared by using a sodium citrate buffer at room temperature.

### (Example 4)

Compound 1 (0.16 g) was dissolved in 40 ml of 0.38% aqueous hydrogen peroxide (pH 3.1) prepared by using a sodium citrate buffer at room temperature.

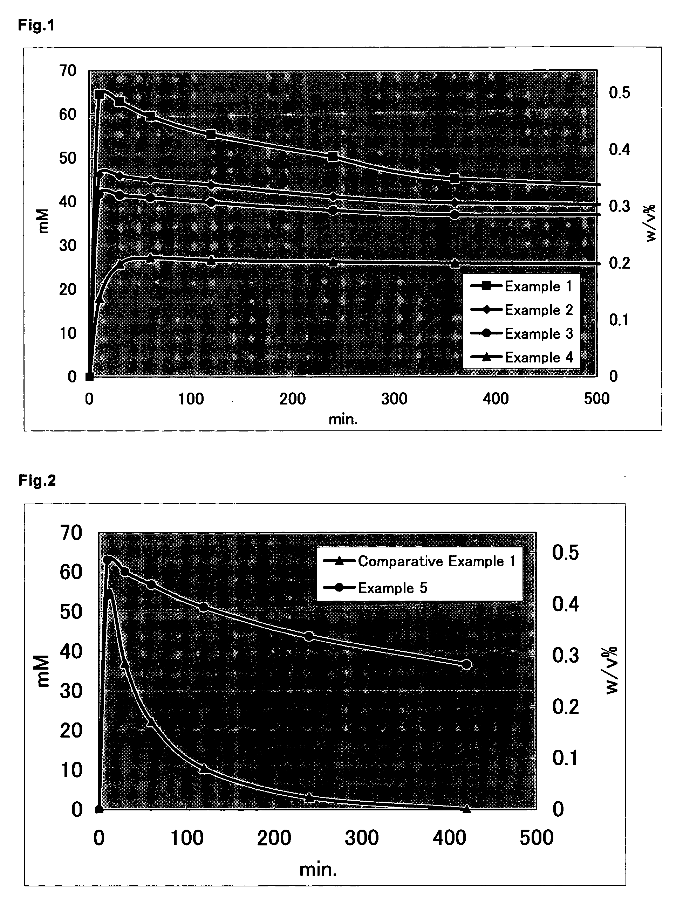

The results of monitoring changes in peracetic acid concentration over time in the aqueous compositions described in Examples 1 to 4 (at room temperature) are shown in Fig. 1, in which each time of the addition of Compound 1 to aqueous hydrogen peroxide was defined as each starting point, The peracetic acid concentration in the test solutions was measured according to the method described by Sully B.D., Williams P.L. et al. in Analyst, 87, pp.653-657 (1962), This method of measurement is a standard method as a method for measuring concentrations of peroxy acid and hydrogen peroxide in a peroxy acid equilibrated solution. As shown in Fig. 1, peracetic acid was quickly produced in all of the compositions. In particular, peracetic acid reached the maximum concentrations within 15 minutes in the solutions of Examples 1 to 3, and decrease of the peracetic acid concentration with time was observed. However, this decrease of concentration was very slow, and thus it was successfully confirmed that sterilization activity at a certain level was maintained over a long period of time, and sufficient sterilization potency was maintained even after repeated use. In Examples 1 to 4, the solutions had an acidic pH throughout the experiments.

### B. Preparation of peroxycarboxylic acid by mixing hydrogen peroxide source (sodium perborate) and acyl compound

### (Example 5)

Sodium perborate (1.34 g) and concentrated sulfuric acid (232 µl) were added to a 20 mM sodium citrate buffer (40 ml), and Compound 1 (0.32 g) was further dissolved in the mixture at room temperature.

### (Comparative Example 1)

Sodium perborate (1.34 g) was dissolved in a 20 mM sodium citrate buffer (40 ml), and Compound 1 (0.32 g) was further dissolved in the solution at room temperature.

*The solutions of Example 5 and Comparative Example 1 correspond to 0.75% solutions of hydrogen peroxide.

The results of monitoring changes in peracetic acid concentration over time of the aqueous compositions described in Example 5 and Comparative Example 1 are shown in Fig. 2, in which each time of the addition of Compound 1 was defined as each starting point. In the solution of Comparative Example 1, a pH was in a basic range throughout the test, and peracetic acid concentration rapidly decreased. In contrast, in the solution of Example 5 (made acidic by the addition of sulfuric acid as a pH regulator), peracetic acid concentration was maintained at a level that allows repeated use as an aqueous composition for sterilization.

### (Example 6)

3-Ethoxypropionic acid (52.70 g) was dissolved in methylene chloride (200 ml), and added dropwise with oxalyl chloride (49.5 ml) at room temperature. After the addition, the mixture was stirred at room temperature for 1 hour, and warmed to 40°C on an oil bath, and the reaction was continued for further 1 hour. The reaction mixture was evaporated under reduced pressure, and the resulting residue was distilled under reduced pressure (boiling point: 56 to 58°C at 15 mmHg) to obtain 3-ethoxypropionyl chloride (46.7 g, yield: 77%).

Imidazole (46.5 g) was dissolved in tetrahydrofuran (500 ml) under a nitrogen flow, and added dropwise with 3-ethoxypropionyl chloride (46,7 g), and the mixture was stirred at room temperature for 1 hour. The salt produced in the reaction mixture was separated by filtration, and the resulting residue was concentrated and dried under reduced pressure to synthesize Compound 10 as the target compound (67.61 g, quantitative yield).

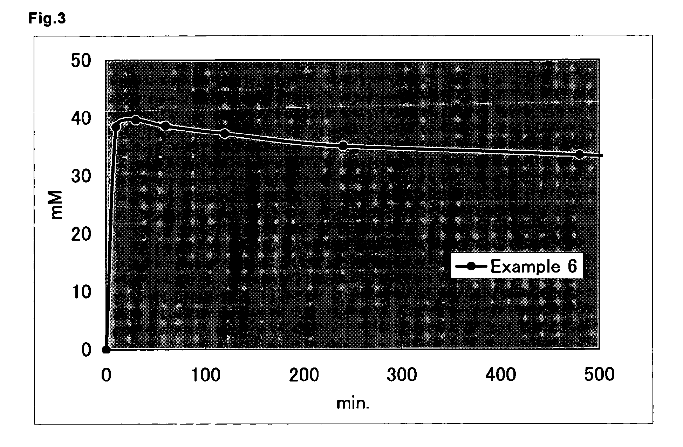

Compound 10 (0.34 g) prepared above was dissolved in 40 ml of 0.50% aqueous hydrogen peroxide (pH 3.1) prepared by using a sodium citrate buffer at room temperature. In the same manner as Example 5, the results of monitoring changes in peracetic acid concentration over time of the above aqueous composition are shown in Fig. 3 in which the time of the addition of Compound 10 was defined as a starting point. From the results shown in Fig. 3, it can be understood that peracetic acid concentration was maintained at a level that allows repeated use as an aqueous composition for sterilization, as in Example 5.

### C. Evaluation of antimicrobial activity

Antimicrobial activity of aqueous compositions for sterilization provided by the method of the present invention against spores was evaluated. Spores of *Bacillus subtilis* IFO3134 were prepared by referring to the preparation method of a spore stock solution described in Notification from Ministry of Health, Labor and Welfare, "Ei-nyu (Notification by the chief of Milk and Meat Hygiene Division, Life Hygiene Bureau)" No.10, January 29, 1996 (Heisei 8). Specifically, *Bacillus subtilis* IFO3134 was cultured on Nutrient Agar (Difco) at 37°C for one week and spore production at a rate about 90% was confirmed. The bacterial cells were suspended in sterilized water (3 ml), and the suspension was heated at 65°C for 30 minutes under shaking at 160 rpm to kill trophozoites. The resulting suspension was centrifuged at 3000 rpm, and the supernatant was discarded. Sterilized water (3 ml) was added to the residue to obtain a stock solution of spores. The stock solution of spores was prepared at 1.1 × 10⁹ cfu/mL, and used for the following evaluation of antimicrobial activity.

Evaluation of antimicrobial activity was conducted according to the method of Sakagami et al. (J. Antibact. Antifung. Agents., Vol.26, 605-601, 1998). Specifically, an aqueous solution (225 µl) of each sample which was filtered through a 0.2 µm filter was added with the spore suspension (25 µl) prepared by the method described above, and reacted for a given period of time at 25°C (concentration of bacteria after mixing: 1.1 × 10⁶ cfu/mL). From the reaction mixture, 2 µL sample was collected and added to 2 ml of SCDLP medium (Nissui Pharmaceutical Co., Ltd.). The cells were cultured at 37°C for 48 hours with shaking at 160 rpm, and the absence or presence of growth of the bacterial cells was examined. Separately, the same reaction mixture (25 µL) was added to a mixed aqueous solution (225 µL) of 0.1 N sodium thiosulfate and 1% catalase to inactivate the peroxycarboxylic acid and hydrogen peroxide. The resulting mixture (100 µL) was inoculated to SCDLP agar medium (Nissui Pharmaceutical Co., Ltd., 25 mL/petri dish). The cells were cultured at 37°C for 48 hours, and colony formation was visually inspected.

Antimicrobial activity of the solutions prepared in Examples 1, 2, 4, 5 and 6 was evaluated 1 hour after the preparation according to the aforementioned method. The results are shown in Table 1. The times described in the table indicate contact times of the sample solutions and the spore suspension, and as the peracetic acid concentration, values actually measured 1 hour after the start of the reaction are indicated. In the table, symbol + indicates that bacterial proliferation in liquid culture or colony formation in agar culture was observed, and symbol - indicates that bacterial proliferation in liquid culture or colony formation in agar culture was not observed.

**Table 1**

| Peroxy acid | Concentration | Culture method | 1 min | 2 min | 3 min | 4 min | 5 min |
|---|---|---|---|---|---|---|---|
| Example 1 | 60 mM | Liquid culture | - | - | - | - | - |
| | | Agar culture | - | - | - | - | - |
| Example 2 | 45 mM | Liquid culture | + | - | - | - | - |
| | | Agar culture | + | - | - | - | - |
| Example 4 | 27 mM | Liquid culture | + | - | - | - | - |
| | | Agar culture | + | - | - | - | - |
| Example 5 | 57 mM | Liquid culture | - | - | - | - | - |
| | | Agar culture | - | - | - | - | - |
| Example 6 | 39 mM | Liquid culture | + | - | - | - | - |
| | | Agar culture | + | - | - | - | - |

From the above results, it was found that the aqueous compositions for sterilization provided by the method of the present invention exhibited strong antibacterial activity equal to or higher than that of commercially available disinfectants for endoscopes. Commercially available peracetic acid solutions of high concentration have irritancy to the skin, eyes and the like, and irritating smell generated from the peroxy acid. Therefore, practical uses thereof as disinfectants cause significant loads of workers, and measures such as ventilation are indispensable. In contrast, the aqueous composition for sterilization of the present invention has low irritancy and a low level of smell, and accordingly, safe and quick preparation of the aqueous composition for sterilization is achievable upon use, and the composition enables safe sterilization of medical apparatuses and the like without any load.

## Claims

1. A method for preparing an aqueous composition for sterilization, which comprises the step of mixing an acylimidazole represented by the general formula (II): 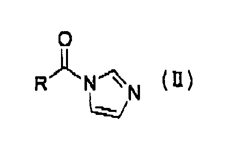 wherein R represents a substituted or unsubstituted C1-C20 alkyl group, or a substituted or unsubstituted C6-C30 aryl group, with an aqueous solution containing a hydrogen peroxide source to produce a corresponding peroxycarboxylic acid.

2. The method according to claim 1, wherein R is an unsubstituted C1-C10 alkyl group, or a C2-C10 alkoxy-bubstituted alkyl group.

3. The method according to claim 1, wherein R is methyl group, ethyl group, methoxymethyl group, 2-methoxyethyl group, or 2-ethoxyethyl group.

4. The method according to claim 3, wherein R is methyl group.

5. The method according to any one of claims 1 to 4, wherein the hydrogen peroxide source is hydrogen peroxide or a peroxide.

6. The method according to any one of claims 1 to 5, wherein the aqueous solution has a hydrogen peroxide source concentration of less than 30%.

7. The method according to any one of claims 1 to 6, wherein the acylimidazole is used at a ratio of 1.0 equivalent or less per 1 mol of hydrogen peroxide.

8. The method according to any one of claims 1 to 7, wherein the peroxycarboxylic acid is produced in the presence of a pH regulator.

9. The method according to of claim 8, wherein the pH regulator is a buffering agent consists of a combination of an acid and a salt thereof.

10. The method according to any one of claims 1 to 9, wherein the peroxycarboxylic acid is produced in the presence of one or more kinds of substances selected from the group consisting of a metal chelating agent, a corrosion inhibitor, a stabilizing agent, and a surfactant.

11. An aqueous composition for sterilization containing a peroxycarboxylic acid obtained by the method according to any one of claims 1 to 10.

12. A sterilization method comprising the step of bringing an aqueous composition for sterilization containing a peroxycarboxylic acid obtained by the method according to any one of claims I to 10 into contact with an object of sterilization.

13. A sterilization method comprising:
(a) the step of mixing an acylimidazole represented by the general formula (II) mentioned in claim 1 with an aqueous solution containing a hydrogen peroxide source to produce an aqueous composition for sterilization containing a corresponding peroxycarboxylic acid, and
(b) the step of bringing the aqueous composition for sterilization obtained by the step
(a) into contact with an object of sterilization.

14. The method according to claim 12 or 13, wherein the object of sterilization is a medical apparatus.

15. The method according to claim 12 or 13, wherein the object of sterilization is an endoscope.

16. A kit for preparing an aqueous composition for sterilization containing a peroxycarboxylic acid, which comprises a composition containing an acylimidazole represented by the general formula (II): 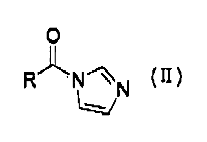 wherein R represents a substituted or unsubstituted C1-C20 alkyl group, or a substituted or unsubstituted C6-C30 aryl group, and a composition containing a hydrogen peroxide source.

17. The kit according to claim 16, wherein the composition containing a hydrogen peroxide source further contains a pH regulator.

18. A reagent for preparing an aqueous composition for sterilization containing a peroxycarboxylic acid, which contains an acylimidazole represented by the general formula (II): 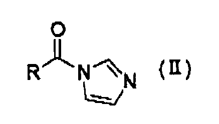 wherein R represents a substituted or unsubstituted C1-C20 alkyl group, or a substituted or unsubstituted C6-C30 aryl group.

19. The reagent according to claim 18, wherein R is an unsubstituted C1-C10 alkyl group.

20. The reagent according to claim 18, wherein R is methyl group.

21. The reagent according to claim 18, wherein R is a C2-C10 alkoxy-substituted alkyl group.

22. The reagent according to claim 18, wherein R is 2-ethoxyethyl group.
